# FASCICULE DE BREVET EUROPEEN

(11) **EP 2 655 050 B1**
(45) Date de publication et mention de la délivrance du brevet: **27.04.2016**
(21) Numéro de dépôt: 11817360.8
(22) Date de dépôt: 16.12.2011
(51) Int. Cl.: B29D 30/24

(54) **SUPPORT MUNI D'ELEMENTS MOBILES POUR L'ASSEMBLAGE D'UNE EBAUCHE CRUE DE PNEUMATIQUE**
TRÄGER MIT BEWEGLICHEN ELEMENTEN ZUM AUFBAUEN EINES REIFENROHLINGS
SUPPORT EQUIPPED WITH MOVABLE ELEMENTS FOR ASSEMBLING A GREEN TYRE BLANK

(30) Priorité: 20.12.2010 FR 1060826
(43) Date de publication de la demande: 30.10.2013
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: ASTIER, Cédric, F-63040 Clermont-Ferrand Cedex 9 (FR)
(74) Mandataire: Noel, Luminita
(86) Numéro de dépôt international: PCT/FR2011/053015
(87) Numéro de publication internationale: WO 2012/085402

(56) Documents cités:
- FR-A1- 2 939 711
- JP-A- 2007 136 935
- JP-A- 2007 185 888
- US-A1- 2007 095 481

## Description

L'invention concerne la fabrication des pneumatiques de roue et en particulier l'assemblage de l'ébauche crue du pneumatique.

La demande FR-2 939 711 au nom de la demanderesse divulgue un support pour l'assemblage d'une ébauche crue de pneumatique. Le support comprend une embase de forme générale cylindrique qui porte sur sa circonférence des organes de formage identiques entre eux. Chaque organe comprend une série d'éléments externes montés à coulissement indépendamment les uns des autres par rapport à un socle de l'organe suivant une direction radiale à l'axe de l'embase. Les faces externes circonférentielles des éléments forment une surface de support pour l'assemblage des pièces servant à la constitution de l'ébauche. La position de chaque élément par rapport au socle est définie en enfilant dans l'organe une came contre laquelle les éléments viennent en appui en occupant la position souhaitée. La came présente un galbe identique au galbe que l'on souhaite donner à la surface de support de l'ébauche. Si l'on souhaite changer la forme de cette surface, par exemple en accentuant ou en réduisant le galbe, on remplace chaque came par une came ayant la forme adaptée. Ce support d'assemblage est donc à géométrie variable et peut servir à lui seul pour l'assemblage de différents types d'ébauches destinées à la fabrication de modèles de pneumatiques différents.

On cherche toutefois à perfectionner ce support. En effet, le mode de montage précité des éléments mobiles donne à la surface d'appui galbée un profil en marches d'escalier présentant des arêtes légèrement saillantes tel qu'observé dans un plan radial au support. Or, c'est sur ce profil que sont directement posées des nappes de gomme crue qui sont relativement fragiles et risquent donc d'être endommagées.

Un but de l'invention est d'améliorer la définition géométrique de la surface d'appui offerte par le support.

A cet effet, on prévoit selon l'invention un organe d'assemblage d'une ébauche crue de pneumatique comme défini dans la revendication 1, organe qui comprend :
- des moyens de fixation à une embase,
- des éléments externes montés mobiles les uns par rapport aux autres, et
- une bande flexible par l'intermédiaire de laquelle les éléments sont attachés les uns aux autres.

On prévoit aussi selon l'invention un support d'assemblage d'une ébauche crue de pneumatique comme défini dans la revendication 2, support qui comprend une embase à symétrie de révolution et des organes selon la revendication 1, fixés à l'embase.

Des formes préférentielles de l'invention sont définies dans les autres revendications dépendantes.

Ainsi, la bande rend inutile de guider les éléments à coulissement par rapport au socle comme dans le document précité. Attachés par la bande, les éléments peuvent s'orienter les uns par rapport aux autres de façon à rendre leurs faces externes localement parallèles les unes aux autres et à supprimer de la sorte l'effet de marches d'escalier. On obtient donc sur le support une surface d'appui pour la construction de l'ébauche qui est lisse et exempte d'arête saillante et n'altère donc pas la gomme crue lors de la mise en place des éléments formant l'ébauche.

Avantageusement, chaque organe comprend un socle et les éléments sont attachés au socle par l'intermédiaire de la bande.

De préférence, la bande est rigidement fixée au socle uniquement par un tronçon de sa longueur.

Ainsi, on obtient une fixation isostatique de la bande au socle qui évite l'apparition de contraintes au sein de l'organe et favorise le bon positionnement des éléments les uns par rapport aux autres.

Avantageusement, le tronçon est situé à égale distance de deux extrémités longitudinales de la bande.

De préférence, la bande est élastiquement flexible.

Avantageusement, la bande est non extensible.

Ainsi on évite que les éléments ne s'éloignent trop les uns des autres au niveau de la surface d'appui et créent donc de grands vides dans celle-ci.

De préférence, la bande est en métal, par exemple en acier.

On peut prévoir que la bande s'étend à distance d'une face interne de chaque élément.

Par exemple, dans chaque élément, la bande est interposée, suivant une direction radiale à un axe principal du support, entre deux pièces de l'élément.

Avantageusement, au moins l'une des pièces présente en regard de la bande une face conformée pour permettre un débattement de l'élément par rapport à la bande autour d'un axe parallèle localement à la bande et perpendiculaire à la direction longitudinale de la bande.

Ainsi, on favorise l'orientation spontanée de l'élément autour de cet axe, ce qui contribue encore à lisser la surface externe du support pour réduire l'effet de marches d'escalier.

De préférence, pour chaque élément, la bande présente un orifice traversé par une pièce de l'élément.

Avantageusement, chaque organe comprend, pour chaque élément, au moins un organe de rappel de l'élément en direction d'un socle de l'organe.

Cet organe permet de maintenir l'élément contre une pièce telle qu'une came définissant la position des éléments par rapport au socle.

De préférence, l'organe de rappel est monté mobile à rotation par rapport à l'un au moins parmi l'élément et le socle autour d'un axe perpendiculaire à un axe principal du support.

Ainsi, l'attachement de chaque élément au socle par l'intermédiaire de l'organe de rappel ne nuit pas à la liberté de l'élément de s'orienter par rapport à ses voisins pour lisser autant que possible la surface externe définie par les éléments.

De préférence, l'organe de rappel est monté mobile à rotation par rapport à l'élément et au socle autour d'axes perpendiculaires à un axe principal du support.

Ainsi, cet agencement stabilise l'élément de forme associé à l'organe. Il limite le risque de basculement de l'élément dans certaines circonstances de sollicitation sous l'effet de l'organe de rappel ou en l'absence de sollicitation autre.

Avantageusement, chaque organe de rappel comprend une armature télescopique non élastique.

De préférence, le support comprend des moyens aptes à mettre l'embase en rotation avec une vitesse inférieure à une vitesse maximale prédéterminée, le ou les organes de rappel associés à chaque élément étant agencés pour rappeler l'élément lorsque le support tourne à la vitesse maximale.

On peut aussi prévoir que chaque organe comprend au moins une came apte à occuper une position quelconque parmi au moins deux positions qui sont l'image l'une de l'autre par une rotation, dans lesquelles la came définit des positions des éléments par rapport à un socle de l'organe et telles que, pour au moins certains des éléments, les positions de l'élément associées aux positions respectives de la came sont différentes l'une de l'autre.

Ainsi, la même came peut servir à donner au moins deux positions différentes aux éléments de l'organe. On peut donc avec un seul jeu de cames donner au moins deux formes différentes à la surface externe du support. Par conséquent, on simplifie la gestion et la manipulation de l'ensemble des cames.

D'autres caractéristiques et avantages de l'invention apparaitront encore dans la description suivante de plusieurs modes de réalisation donnés à titre d'exemples non limitatifs en référence aux dessins annexés sur lesquels :
- la figure 1 montre des vues en perspective et en élévation d'un support selon un premier mode de réalisation de l'invention définissant une surface d'appui ;
- la figure 2 montre des vues du support analogues à celles de la figure 1 et dans lesquelles le support définit une autre surface d'appui ;
- les figures 3 à 6 sont quatre vues en perspective de l'un des organes du support de la figure 1 montrant respectivement l'organe complet, l'organe avec quelques éléments ôtés, l'organe avec la plupart des éléments ôtés et le socle de l'organe seul ;
- les figures 7 et 8 sont deux vues respectivement de côté et en coupe longitudinale de l'organe de la figure 3 ;
- la figure 9 est une vue à plus grande échelle de la partie D de l'organe de la figure 8 ;
- les figures 10 et 11 sont des vues respectivement en perspective et en coupe verticale d'un des organes de rappel de l'organe de la figure 7 ;
- les figures 12 à 14 sont des vues en coupe transversale suivant les plans XII-XII, XIII-XIII et XIV-XIV de l'organe de la figure 7 ;
- les figures 15 à 18 sont des vues analogues aux figures 7 et 12 à 14 illustrant les liaisons cinématiques entre les pièces ;
- la figure 19 est une vue en perspective de la came de l'organe de la figure 8 ;
- les figures 20 à 24 montrent chacune une vue d'extrémité et une vue en élévation de la came de la figure 19 dans une variante de réalisation et dans des positions de la came différant les unes des autres par la rotation de la came autour de son axe ; et
- les figures 25 à 28 sont des vues analogues respectivement aux figures 1, 3, 14 et 18 montrant un deuxième mode de réalisation du support selon l'invention.

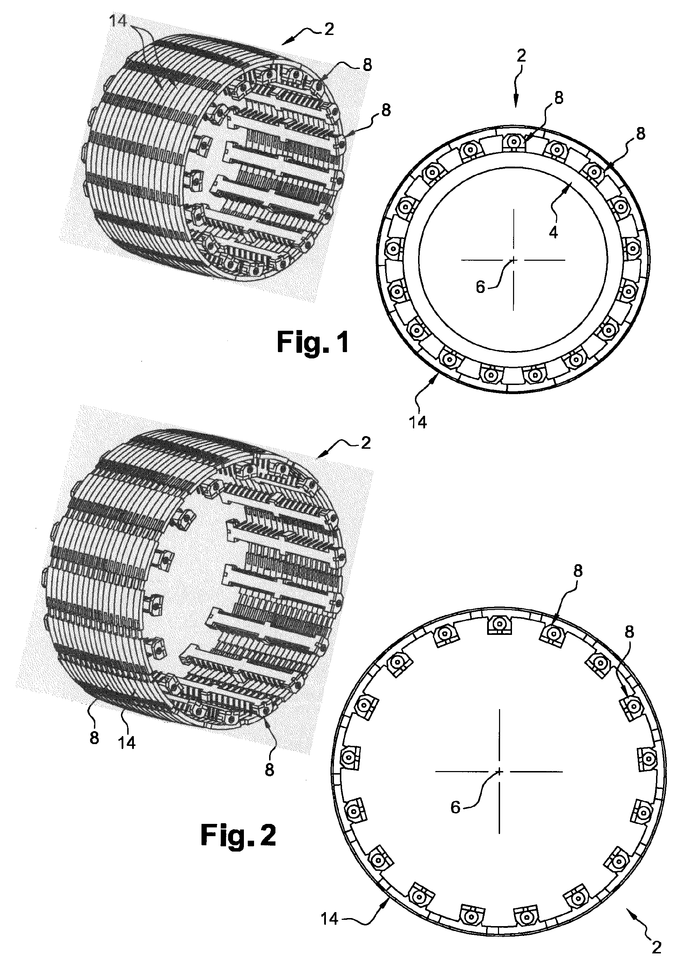

Nous allons présenter dans la suite deux modes de réalisation d'un support servant à la fabrication d'une ébauche crue de pneumatique de roue. Il peut s'agir au choix d'une roue de véhicule de tourisme, de véhicule léger, de véhicule utilitaire, de véhicule du type poids lourd ou encore d'une roue d'un engin de génie civil. Nous allons décrire en référence aux figures 1 à 24 un premier mode de réalisation du support 2.

Le support comprend une embase 4 présentant une forme générale annulaire à symétrie de révolution autour d'un axe 6 qui est ici horizontal. L'embase 4 est d'un type connu et ne sera pas décrite ici plus en détail. Dans toute la suite, la direction radiale est prise, sauf indication contraire, par référence à l'axe 6.

Le support 2 comprend des organes de formage 8, en l'espèce identiques entre eux et fixés à une face externe de l'embase 4. Chaque organe 8 a une forme générale allongée rectiligne parallèle à l'axe 6. Les organes 8 sont disposés avec leurs extrémités longitudinales en coïncidence et sont régulièrement répartis autour de l'axe 6.

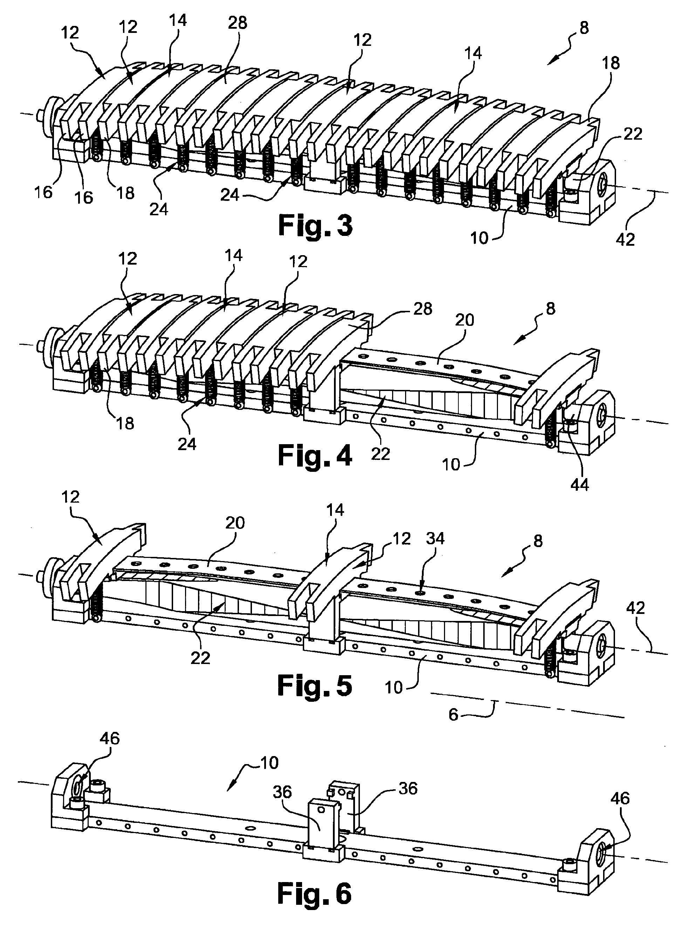

Nous allons décrire dans la suite l'un des organes 8. L'organe comprend un socle 10 représenté en particulier à la figure 6. Le socle a une forme générale rectiligne allongée et constitue un ensemble rigide. L'organe 8 est rigidement fixé à l'embase par son socle 10 et par des moyens de fixation classiques qui ne sont pas décrits ici.

L'organe 8 comprend une série d'éléments externes 12 s'étendant d'un côté du socle opposé à l'embase 4. Les éléments 12 sont, en l'espèce, tous identiques entre eux au sein de l'organe 8. Les éléments 12 se succèdent le long du socle en étant alignés parallèlement à l'axe 6, régulièrement espacés dans la succession et avec leurs bords d'extrémités en coïncidence.

Chaque élément 12 présente un plan de symétrie perpendiculaire à l'axe 6 lorsque les éléments forment une surface d'appui cylindrique comme on le verra plus loin. Chaque élément 12 présente une face externe ou sommet 14 qui constitue la zone de l'organe 8 la plus éloignée de l'axe 6. La face 14 présente une légère courbure dans un plan radial et dans un plan perpendiculaire à l'axe 6. Le sommet 14 a en vue de dessus une forme qui est, en l'espèce, rectangulaire, la longueur du rectangle correspondant à la direction circonférentielle de l'embase 4.

Chaque élément 12 se prolonge d'un côté de l'organe avec deux dents 16 et du côté opposé avec une unique dent 18. Sur le premier côté, les deux dents 16 sont espacées l'une de l'autre suivant la direction de l'axe 6 et prolongent respectivement les grandes faces avant et arrière de l'élément. De l'autre côté, la dent 18 s'étend à distance de ces deux faces. Les trois dents prolongent également le sommet 14.

Les éléments 12 sont disposés de sorte que, de chaque côté de l'organe, chaque dent unique 18 est interposée entre deux couples de dents 16 comme illustré sur la figure 3. Les dents 16 et 18 sont identiques et régulièrement réparties dans la succession sur chaque côté de l'organe.

Grâce à la dissymétrie de chaque organe 8 par référence à un plan longitudinal médian radial, les dents situées d'un côté de l'organe sont aptes à s'étendre entre les dents de l'organe 8 suivant dans la succession le long de la circonférence du support 2. Ainsi, les dents des organes successifs s'interpénètrent. De la sorte, malgré la discontinuité des socles 10 le long de la circonférence de l'embase 4, les organes 8 forment une surface d'appui continue tout le long de la circonférence de l'embase. En particulier, si l'on suit cette surface de l'un à l'autre de ses bords d'extrémité axiale dans un plan radial à l'axe 6, quelle que soit la position de ce plan, on vient toujours en appui sur un ou deux des organes 8.

Et cette propriété est conservée si l'embase 4 est agencée de façon à permettre de faire varier la distance de chaque organe 8 par rapport à l'axe 6. C'est le cas qui a été illustré sur les figures 1 et 2 qui montrent respectivement l'embase en position rétractée et en position étendue. Les embases ayant ce type de caractéristiques sont connues en elles mêmes de sorte qu'il ne sera pas donné davantage de détails ici. En position rétractée, sur la figure 1, les dents 16 et 18 s'interpénètrent étroitement sur la plus grande partie de la longueur des dents mesurée en direction circonférentielle. En position étendue sur la figure 2, ce sont seulement les extrémités des dents qui s'interpénètrent.

Dans chaque organe 8, les éléments 12 sont fixés au socle 10 en étant reliés les uns aux autres par une bande ou clinquant 20. Une came 22 est interposée suivant la direction radiale à l'axe 6 entre le socle 10 d'une part et les éléments 12 d'autre part, sachant que ces derniers sont rappelés en direction du socle par des organes de rappel 24.

La bande 20 est unique pour un même organe 8, propre à ce dernier et commune à tous ses éléments 12. Elle présente une forme plate, allongée et rectangulaire en plan. Il s'agit d'une bande flexible, en l'espèce élastiquement flexible, et non extensible de sorte que sa longueur ne peut pas être augmentée par étirement de la bande. La bande est réalisée par exemple en métal, en l'espèce en acier. La bande 20 s'étend le long du socle 10, à distance de ce dernier et parallèlement à celui-ci suivant une direction parallèle à l'axe 6.

Chaque élément 12 comprend un pied 26 et une tête 28. Le pied 26 est interposé entre la tête et le socle 10 par référence à la direction radiale. La tête 28 définit la face de sommet 14. La tête 28 présente sur sa face orientée en direction de l'axe 6 une cavité 30 à fond plat recevant la bande 20 de sorte que la tête est à cheval sur la bande. La cavité reçoit également le pied 26 si bien que la bande est prise en sandwich entre la tête et le pied en étant interposée entre ceux-ci suivant la direction radiale.

Chaque élément comprend un organe de fixation tel qu'en l'espèce une vis 32 dont la tige traverse suivant la direction radiale un orifice du pied 26, un orifice 34 de la bande et un orifice de la tête 28. La vis est vissée dans l'orifice fileté de la tête de façon à assurer une fixation rigide du pied à la tête et au tronçon de bande interposé entre eux. La tête de la vis est en appui contre le pied.

La bande 20 présente ainsi le long de la bande une succession d'orifices 34 dans les tronçons successifs de la bande auxquels sont fixés les éléments 12 de la série. Les éléments 12 sont donc fermement attachés les uns aux autres par la bande 20. Ces tronçons s'étendent chacun de l'un à l'autre des bords longitudinaux de la bande et à distance d'au moins l'une de ses extrémités axiales, et à distance des deux pour la plupart des tronçons.

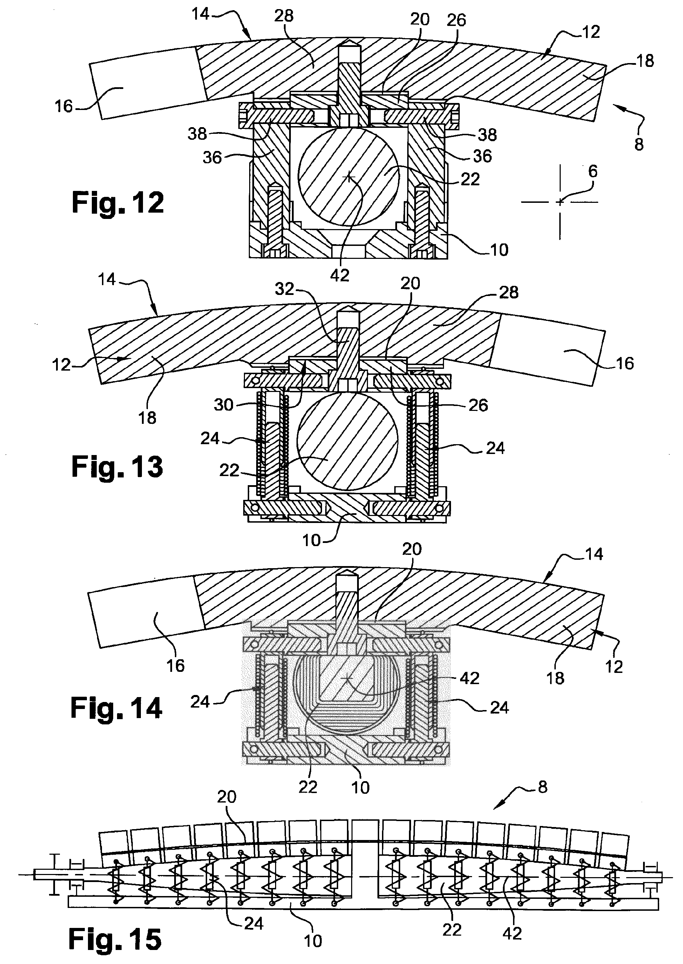

Le nombre d'éléments 12 de la série est, en l'espèce, impair. Dans le présent exemple, l'élément 12 situé au milieu dans la succession est fixé rigidement au socle 10 comme illustré notamment à la figure 12. A cet effet, le socle comprend deux montants 36 dont les extrémités libres sont rigidement fixées au pied 26 de l'élément 12 correspondant, en l'espèce au moyen de vis 38 s'étendant respectivement à travers les montants et le pied 26 parallèlement à la direction de l'axe 6.

Comme dans les autres éléments 12, un tronçon de la bande 20 est rigidement fixé à cet élément. Il s'agit d'un tronçon situé à égale distance des extrémités longitudinales de la bande. La bande est donc rigidement fixée au socle 10 par un tronçon central de la bande et uniquement par ce dernier.

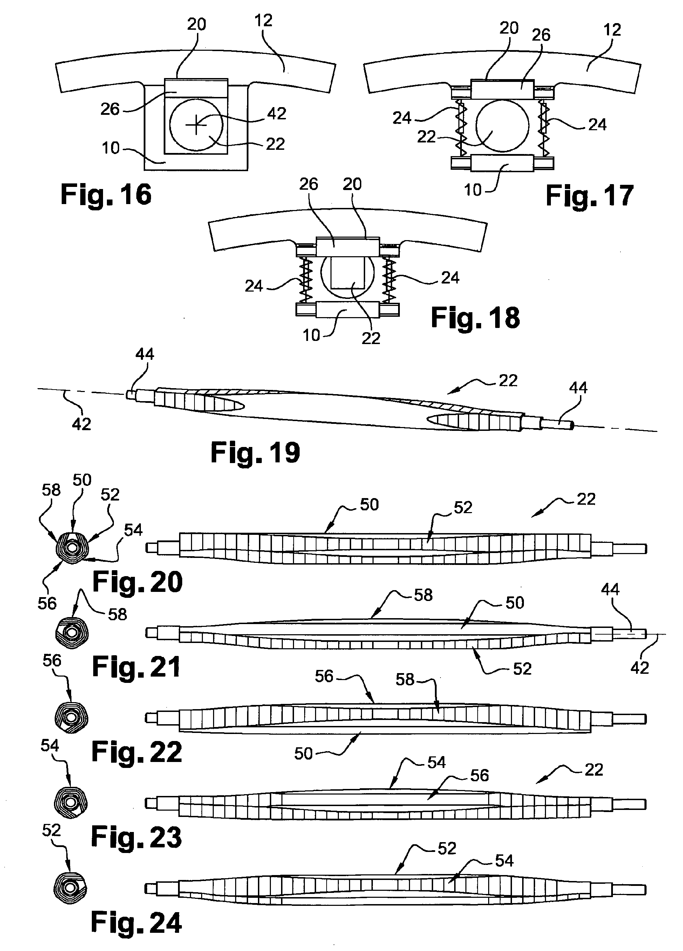

La came 22 est illustrée notamment aux figures 4, 5, 7 à 9 et 12 à 19 ainsi qu'aux figures 20 à 24 mais dans une variante de réalisation. Elle présente une forme allongée dotée d'un axe longitudinal 42 parallèle à l'axe 6. La came est reçue dans l'organe 8 en s'étendant parallèlement au socle 10 et à la succession d'éléments 12 et en étant interposée suivant la direction radiale entre le socle et la succession d'éléments comme illustré notamment aux figures 12 à 14. La came 22 présente deux tronçons d'extrémité longitudinale cylindriques 44 reçus dans des paliers respectifs 46 du socle de sorte que la came est montée mobile à rotation sur le socle autour de son axe 42.

Les organes de rappel 24 sont agencés pour rappeler les éléments 12, à l'exception de l'élément médian précité, en direction de l'axe 6 et donc en contact avec la partie de la came s'étendant en regard des éléments. C'est donc cette partie qui définit la position de chaque élément 12 suivant la direction radiale.

La came 22 présente à cette fin plusieurs portées, en l'espèce au nombre de quatre sur la came des figures 4, 5, 7 à 9 et 12 à 19, et au nombre de cinq, numérotées 50, 52, 54, 56 et 58 sur la came constituant la variante des figures 20 à 24. Sur les figures 20 à 24, les cinq positions respectives de la came sont l'image les unes des autres par une rotation d'un cinquième de tour autour de l'axe 42.

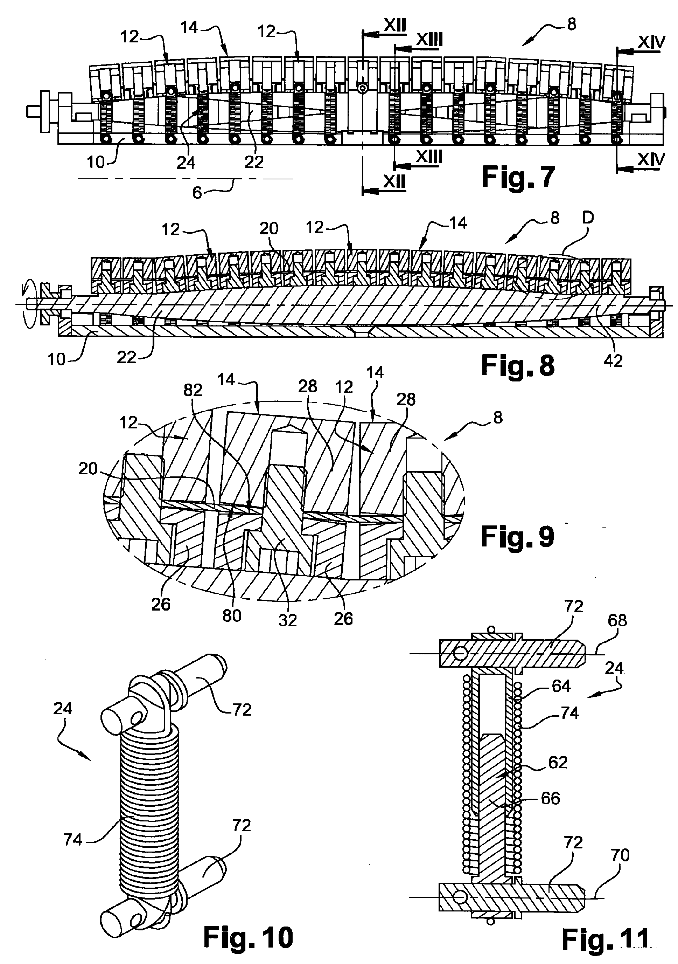

Chaque portée est définie par une ou plusieurs faces se succédant le long de la came. La face interne du pied 26 de chaque élément est plane et localement parallèle à sa face de sommet 14. Le profil de chaque portée dans le plan radial, lorsque cette portée s'étend au sommet de la came et constitue ainsi la portée active, confère un profil analogue à la face d'appui formée en coopération par les sommets 14 des éléments 12 comme illustré notamment à la figure 8.

Dans le présent exemple, l'une 50 des portées est destinée à placer tous les sommets 14 à la même distance radiale de façon à donner au support une forme générale cylindrique. Pour cela, la portée 50 est définie par une face plane parallèle à l'axe 6. Toutes les autres portées 52 à 58 ont une forme galbée, à savoir une forme convexe généralement courbe. Ce galbe correspond au profil de la portée en question dans un plan radial à l'axe 42 c'est-à-dire dans un plan radial à l'axe 6 lorsque la portée est active.

La portée 50 est définie par une unique face plane. La portée 58 est définie par une unique face galbée. La portée 56 est définie par deux faces d'extrémité galbées et une face médiane plane. La portée 54 est définie comme la portée 58 avec toutefois un galbe plus prononcé. Dans le présent exemple, certaines des portées présentent une face plane qui est d'autant plus grande qu'on s'éloigne de l'axe longitudinal de la came.

Les organes de rappel 24 sont prévus par paires de sorte que chaque élément 12 est rappelé par deux organes dédiés situés de chaque côté du socle 10. On compte donc deux fois plus d'organes 24 que d'éléments 12, en rappelant que l'élément 12 central n'est pas mobile par rapport au socle.

Les organes de rappel sont tous identiques. Comme illustré aux figures 10 et 11, chaque organe 24 comprend une armature télescopique 62 comprenant en l'espèce un tube 64 et un coulisseau 66 monté mobile à coulissement dans le tube suivant une direction radiale. Le tube et le coulisseau sont en contact l'un avec l'autre par des faces cylindriques à sections circulaires dans un plan perpendiculaire à la direction de coulissement. L'un des deux éléments de l'armature, en l'espèce le tube, est fixé par une extrémité au pied 26 de l'élément, ici au moyen d'une liaison pivot autour d'un axe 68 parallèle à la bande et perpendiculaire à la direction longitudinale de cette dernière. Pareillement, l'autre élément de l'armature, en l'espèce le coulisseau 66, est relié par une liaison pivot au socle 10 autour d'un axe 70 parallèle à l'axe 68. Chaque liaison pivot est ici matérialisée par un arbre 72 traversant l'élément concerné de l'armature et le pied ou le socle.

Chaque organe de rappel 24 comprend en outre un ressort de tension hélicoïdal 74 qui est ici enfilé de façon concentrique sur l'armature, les extrémités longitudinales du ressort étant fixées rigidement respectivement aux extrémités distales du tube et du coulisseau. Le ressort est agencé pour tendre à rapprocher l'un de l'autre les deux arbres 72, et donc à rapprocher le pied 26 du socle 10.

Grâce à cet agencement, les deux organes 24 tendent donc à maintenir chaque organe 12 en contact avec la portée active de la came qui confère sa forme au sommet de l'organe 8. On peut prévoir que le support comprend une motorisation destinée à faire tourner l'embase, les organes 8 et l'ébauche à une vitesse inférieure ou égale à une limite maximale prédéterminée. Les organes 24 sont prévus, en particulier par le choix de la raideur du ressort 74, pour être aptes à maintenir l'élément 12 en contact avec la came à l'encontre de l'éventuelle sollicitation de flexion exercée par la bande 20 sur l'élément qui tend à l'éloigner de l'axe 6 et cumulativement de la force centrifuge générée par la rotation du support.

On a illustré aux figures 15 à 18 les liaisons cinématiques entre les pièces résultant de la description qui précède. Comme illustré notamment aux figures 12 et 13, la came n'est pas en contact avec le socle sur toute la longueur de la came pour réduire les risques de montage hyperstatique.

Pour modifier la forme de la surface d'appui définie par les sommets 14, il suffit de faire tourner la came 22 autour de son axe 42 de façon à changer la portée avec laquelle les éléments sont en contact et qui définit la position radiale de ceux-ci. La came illustrée aux figures 1 à 19 offre donc quatre positions possibles tandis que la came illustrée aux figures 20 à 24 en offre cinq, à savoir une position dans laquelle le support forme une surface d'appui cylindrique et quatre positions dans lesquelles il offre une surface d'appui galbée, la partie de la surface distante des extrémités axiales étant bombée. C'est donc la même came qui permet de former différentes surfaces d'appui avec l'organe 8.

On peut prévoir un mécanisme à engrenage reliant les unes aux autres les cames 22 des organes respectifs de façon à faire tourner simultanément toutes les cames pour passer d'une forme de surface à l'autre.

Dans chaque position, y compris lorsque la surface est galbée, les éléments 12 forment avec leurs sommets successifs 14 une surface qui ne présente aucun bord saillant et donc pas une configuration en marches d'escalier.

Les portées sont définies, en l'espèce, de sorte que chaque élément vient en contact avec la portée active de la came au moins par trois points non alignés entre eux, et ce quelle que soit la portée utilisée. On définit donc un plan d'appui de chaque élément sur la came. En l'espèce, on prévoit même un contact surfacique entre un tronçon de la portée de la came et la face interne du pied 26. Cet agencement assure une position stable et précise de l'élément sur la came.

On observe, par exemple sur les figures 7 et 8, que certains des éléments 12 n'ont pas leurs sommets 14 parallèles à l'axe 6. Cela résulte du fait que la portée contre laquelle ces éléments sont en appui n'est pas elle-même parallèle à cet axe. L'inclinaison éventuelle du sommet 14 par rapport à l'axe 6 est permise d'une part par la flexibilité de la bande 20 qui maintient les éléments 12 attachés les uns aux autres tout en leur permettant de basculer les uns par rapport aux autres autour d'un axe parallèle aux axes 68 et 70, et par ailleurs par les liaisons pivot des organes de rappel qui assurent ce rappel sans interdire le basculement éventuel de l'élément par rapport au socle autour de ces axes.

En outre, comme illustré à la figure 9, les faces internes 80 et 82 de la tête 28 et du pied 26 qui s'étendent en regard de la bande ont une forme courbe convexe sur chaque zone de ces faces s'étendant de la vis 32 jusqu'à la face avant ou la face arrière de l'élément. Les faces 80 et 82 ont donc une forme qui les éloigne de la bande à partir de la vis lorsque la bande est dans une configuration plane. La hauteur de la zone d'interposition recevant la bande va donc en augmentant à mesure qu'on s'éloigne de la vis 32. On offre là une possibilité supplémentaire de débattement à l'élément 12 qui facilite encore son positionnement contre la portée de la came.

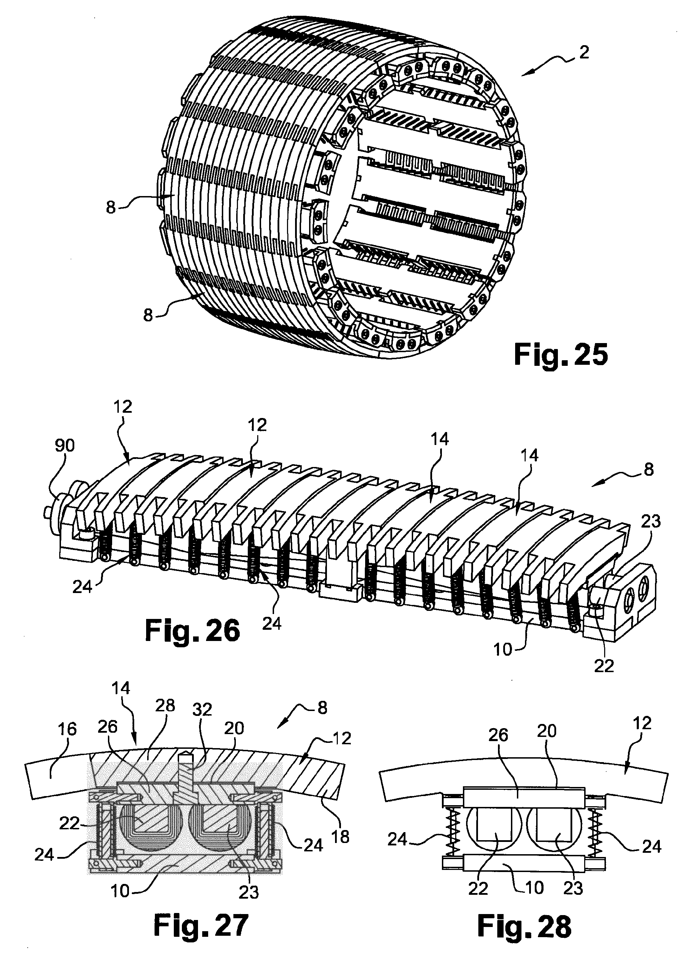

On a illustré aux figures 25 à 28 un deuxième mode de réalisation du support selon l'invention.

Dans son principe, ce support est identique au précédent mis à part que chaque organe 8 porte non pas une unique came 22 mais deux cames 22 et 23 disposées côte à côte en étant interposées entre le socle et les éléments 12 en lieu et place de la came unique du précédent mode. Le socle et les éléments ont été élargis en direction circonférentielle de façon à permettre la réception des deux cames. Comme précédemment, chacune des cames est montée mobile à rotation sur le socle et présente plusieurs portées se succédant sur le pourtour de la came. Les cames sont disposées l'une à côté de l'autre avec leurs extrémités en coïncidence et leurs axes longitudinaux parallèles. Comme précédemment, chaque came définit avec la portée active, à savoir celle qui est la plus distante de l'axe 6, une face d'appui pour les éléments 12. En l'espèce, chaque élément vient en appui simultanément contre les deux cames, la partie gauche de l'élément venant en appui contre une des cames tandis que sa partie droite vient en appui contre l'autre. Ici, chacune des cames présente quatre portées régulièrement réparties autour de l'axe de la came et séparées les unes des autres par un quart de tour. Pour changer la portée active, il suffit de faire tourner la came d'un quart de tour autour de son axe.

En l'espèce, on peut rendre mutuellement dépendantes les rotations des deux cames, par exemple au moyen d'un système à poulie et courroie, de sorte que la rotation de l'une des cames entraîne la rotation de l'autre et inversement. On change ainsi la portée active des deux cames simultanément.

Dans ces deux modes de réalisation, on voit que chaque organe comprend un dispositif composite associant la flexibilité de la bande de faible épaisseur à la rigidité de la pièce massive formant le pied de chaque élément, et que la déformation permise par ce dispositif est similaire à celle d'une colonne vertébrale.

Les différentes portées étant réparties sur des azimuts différents de la came, pour l'usinage de cette dernière, on peut partir d'une ébauche de forme cylindrique à section circulaire. On usine, par exemple par roulage le long de la came, une première des portées à un certain azimut. Ensuite, on fait tourner la came à l'azimut suivant et on usine à nouveau par roulage la portée correspondante. On procède plusieurs fois de cette façon jusqu'à réalisation de toutes les portées.

C'est l'élément central 12 qui donne l'altitude maximale de la forme galbée du support, ses voisins étant associés aux points les plus hauts de la portée correspondante sur la came. Il est le seul qui n'est pas en appui sur la came et dont la position est invariable quelle que soit la forme donnée au support. De plus, plus on s'éloigne de cet élément central, plus l'élément considéré présente une surface de contact importante avec la portée active de la came, pourvu que cette portée soit galbée.

Les organes de rappel 24 ont pour objet notamment de compenser la raideur de la bande. Les deux liaisons pivot donnent deux degrés de liberté de mouvement à l'élément par rapport au socle. Les organes 24 dotés de leur armature assurent la stabilité des éléments 12 en empêchant leur basculement sous sollicitation et en garantissant leur positionnement.

La lame métallique flexible participe également à la stabilité du système. Plus elle est courbée en flexion, plus elle est rigide en torsion. Il n'y a qu'en présence de la portée plate qu'elle n'est pas courbée et ne participe donc pas ou peu à la rigidité en torsion du système.

La version de l'invention associant une seule came à chaque organe a pour avantage de réaliser un gain de masse. La version à plusieurs cames est intéressante lors de la pose de produits avec de fortes sollicitations. Elle est certes plus lourde et créé donc un effort centrifuge plus important lors de la rotation du support mais elle permet d'obtenir deux appuis pour chaque élément de forme sur les cames. Cela confère au support une plus grande stabilité.

L'invention n'engendre aucune limitation dans la forme de la surface que l'on souhaite générer avec le support. Il suffit en effet de réaliser pour chaque organe au moins une came ayant la forme correspondante pour que la forme souhaitée soit obtenue sur le support recevant l'ébauche en cours de réalisation.

Le support selon l'invention sert pour l'assemblage d'une ébauche crue de pneumatique. Cette ébauche est réalisée en assemblant les uns aux autres et en fixant entre eux plusieurs éléments de gomme crue tels que des nappes. La gomme comprend un mélange d'élastomère synthétique, d'élastomère naturel, d'adjuvants et d'huile. L'assemblage peut aussi mettre en oeuvre des pièces de renfort en métal ou en textile.

Lors de la mise en oeuvre du procédé de l'invention pour la fabrication de l'ébauche, on procède ici comme suit:
- on suppose par exemple que la face d'appui externe du support 2 a initialement une forme cylindrique;
- on installe sur cette face plusieurs nappes de gomme et on soude les nappes entre elles;
- ensuite, on fait passer la ou les cames de chaque organe de la position dans laquelle la portée active est plate à une position dans laquelle la portée active est galbée de façon à donner une forme galbée à la face d'appui du support 2. Cela a pour effet de déformer l'ébauche en cours de construction;
- on poursuit ensuite l'assemblage de l'ébauche sur le support ayant maintenant cette géométrie, par exemple en ajoutant à l'ébauche d'autres éléments de gomme que l'on fixe aux précédents.

On peut pareillement modifier encore une ou plusieurs fois la forme du support 2 selon les nécessités de la fabrication de l'ébauche.

Lors d'une étape ultérieure, l'ébauche de gomme crue fait l'objet d'une étape de cuisson pour la vulcanisation de la gomme en vue de l'obtention du pneumatique.

Si on ne souhaite pas générer de tension dans l'ébauche lors du passage d'une portée active plate à une portée active galbée, la portée plate doit être celle ayant la plus grande distance à l'axe de la came. On réalisera donc les portées galbées en leur donnant des dimensions radiales inférieures à celles de la portée plate. Si au contraire, on souhaite générer une légère tension au centre de l'ébauche, il suffit d'abaisser un peu la portée plate par rapport au point le plus haut d'au moins l'une des portées galbées.

Le support selon l'invention peut aussi servir à fabriquer des ébauches de formes différentes destinées à constituer des pneumatiques de modèles différents.

Un autre avantage de l'invention est qu'elle ne requiert pas d'opération de réglage après que l'on a changé la forme de la face du support par rotation des cames.

Bien entendu, on pourra apporter à l'invention de nombreuses modifications sans sortir du cadre de celle-ci.

On pourra mettre en oeuvre indépendamment l'une de l'autre d'une part la bande flexible par l'intermédiaire de laquelle les éléments sont attachés les uns aux autres, et d'autre part la came apte à occuper une position quelconque parmi au moins deux positions qui sont l'image l'une de l'autre par une rotation, la came définissant des positions des éléments par rapport au socle et telles que, pour au moins certains des éléments, les positions de l'élément associées aux positions respectives de la came sont différentes l'une de l'autre.

On peut prévoir que les cames utilisées sont du type de celles divulguées dans le document FR-2 939 711 précité.

## Revendications

1. Organe (8) d'assemblage d'une ébauche crue de pneumatique, **caractérisé en ce qu'**il comprend :
- des moyens de fixation à une embase (4),
- des éléments externes (12) montés mobiles les uns par rapport aux autres, et
- une bande flexible (20) par l'intermédiaire de laquelle les éléments sont attachés les uns aux autres.

2. Support d'assemblage (2) d'une ébauche crue de pneumatique, **caractérisé en ce qu'**il comprend une embase (4) à symétrie de révolution et des organes (8) selon la revendication précédente fixés à l'embase.

3. Support selon la revendication précédente dans lequel chaque organe comprend un socle (10) et les éléments (12) sont attachés au socle par l'intermédiaire de la bande.

4. Support selon la revendication précédente dans lequel la bande (20) est rigidement fixée au socle uniquement par un tronçon de sa longueur.

5. Support selon la revendication précédente dans lequel le tronçon est situé à égale distance de deux extrémités longitudinales de la bande (20).

6. Support selon au moins l'une quelconque des revendications 2 à 5 dans lequel la bande (20) est non extensible.

7. Support selon au moins l'une quelconque des revendications 2 à 6 dans lequel la bande (20) s'étend à distance d'une face interne de chaque élément (12).

8. Support selon au moins l'une quelconque des revendications 2 à 7 dans lequel, dans chaque élément, la bande (20) est interposée, suivant une direction radiale à un axe principal (6) du support, entre deux pièces (26, 28) de l'élément.

9. Support selon la revendication précédente dans lequel au moins l'une des pièces (26, 28) présente en regard de la bande (20) une face (80, 82) conformée pour permettre un débattement de l'élément par rapport à la bande autour d'un axe parallèle localement à la bande et perpendiculaire à la direction longitudinale de la bande.

10. Support selon au moins l'une quelconque des revendications 2 à 9 dans lequel chaque organe comprend, pour chaque élément, au moins un organe (24) de rappel de l'élément en direction d'un socle de l'organe.

11. Support selon la revendication précédente dans lequel l'organe de rappel (24) est monté mobile à rotation par rapport à l'un au moins parmi l'élément et le socle autour d'un axe (68, 70) perpendiculaire à un axe principal (6) du support.

12. Support selon au moins l'une quelconque des revendications 10 et 11 dans lequel l'organe de rappel (24) est monté mobile à rotation par rapport à l'élément et au socle autour d'axes (68, 70) perpendiculaires à un axe principal (6) du support.

13. Support selon au moins l'une quelconque des revendications 10 à 12 dans lequel chaque organe de rappel comprend une armature télescopique non élastique (62).

14. Support selon au moins l'une quelconque des revendications 10 à 13 dans lequel le support (2) comprend des moyens aptes à mettre l'embase en rotation avec une vitesse inférieure à une vitesse maximale prédéterminée, le ou les organes de rappel (24) associés à chaque élément étant agencés pour rappeler l'élément lorsque le support tourne à la vitesse maximale.

15. Support selon au moins l'une quelconque des revendications 2 à 14 dans lequel chaque organe comprend au moins une came (22, 23) apte à occuper une position quelconque parmi au moins deux positions qui sont l'image l'une de l'autre par une rotation, dans lesquelles la came définit des positions des éléments par rapport à un socle de l'organe et telles que, pour au moins certains des éléments, les positions de l'élément associées aux positions respectives de la came sont différentes l'une de l'autre.

## Patentansprüche

1. Bauteil (8) zum Zusammenbau eines Luftreifenrohlings, **dadurch gekennzeichnet, dass** es enthält:
- Einrichtungen zur Befestigung an einem Unterteil (4),
- äußere Elemente (12), die zueinander beweglich montiert sind, und
- ein elastisches Band (20), mittels dessen die Bauteile aneinander befestigt sind.

2. Träger (2) zum Zusammenbau eines Luftreifenrohlings, **dadurch gekennzeichnet, dass** er ein drehsymmetrisches Unterteil (4) und Bauteile (8) nach dem vorhergehenden Anspruch enthält, die am Unterteil befestigt sind.

3. Träger nach dem vorhergehenden Anspruch, wobei jedes Bauteil einen Sockel (10) enthält und die Elemente (12) mittels des Bands am Sockel befestigt sind.

4. Träger nach dem vorhergehenden Anspruch, wobei das Band (20) nur über einen Abschnitt seiner Länge starr am Sockel befestigt ist.

5. Träger nach dem vorhergehenden Anspruch, wobei der Abschnitt sich in gleichem Abstand zu den zwei Längsenden des Bands (20) befindet.

6. Träger nach mindestens einem der Ansprüche 2 bis 5, wobei das Band (20) nicht dehnbar ist.

7. Träger nach mindestens einem der Ansprüche 2 bis 6, wobei das Band (20) sich in Abstand zu einer Innenseite jedes Elements (12) erstreckt.

8. Träger nach mindestens einem der Ansprüche 2 bis 7, wobei in jedem Element das Band (20) in einer Richtung radial zu einer Hauptachse (6) des Trägers zwischen zwei Teilen (26, 28) des Elements eingefügt ist.

9. Träger nach dem vorhergehenden Anspruch, wobei mindestens eines der Teile (26, 28) gegenüber dem Band (20) eine Seite (80, 82) aufweist, die gestaltet ist, um einen Ausschlag des Elements bezüglich des Bands um eine Achse lokal parallel zum Band und lotrecht zur Längsrichtung des Bands zu erlauben.

10. Träger nach mindestens einem der Ansprüche 2 bis 9, wobei jedes Bauteil für jedes Element mindestens ein Rückstellbauteil (24) des Elements in Richtung eines Sockels des Bauteils enthält.

11. Träger nach dem vorhergehenden Anspruch, wobei das Rückstellbauteil (24) bezüglich mindestens eines vom Element und vom Sockel um eine Achse (68, 70) lotrecht zu einer Hauptachse (6) des Trägers drehbeweglich montiert ist.

12. Träger nach mindestens einem der Ansprüche 10 und 11, wobei das Rückstellbauteil (24) bezüglich des Elements und des Sockels um Achsen (68, 70) lotrecht zu einer Hauptachse (6) des Trägers drehbeweglich montiert ist.

13. Träger nach mindestens einem der Ansprüche 10 bis 12, wobei jedes Rückstellbauteil ein nicht elastisches Teleskopgestell (62) enthält.

14. Träger nach mindestens einem der Ansprüche 10 bis 13, wobei der Träger (2) Einrichtungen enthält, die das Unterteil mit einer geringeren Geschwindigkeit als eine vorbestimmte maximale Geschwindigkeit in Drehung versetzen können, wobei das oder die jedem Element zugeordnete(n) Rückstellbauteile (24) eingerichtet sind, um das Element zurückzustellen, wenn der Träger mit der maximalen Geschwindigkeit dreht.

15. Träger nach mindestens einem der Ansprüche 2 bis 14, wobei jedes Bauteil mindestens eine Nocke (22, 23) enthält, die eine beliebige Stellung unter mindestens zwei Stellungen einnehmen kann, die die Abbildung voneinander durch eine Drehung sind, in denen die Nocke Stellungen der Elemente bezüglich eines Sockels des Bauteils und derart definiert, dass für mindestens bestimmte der Elemente die den jeweiligen Stellungen der Nocke zugeordneten Stellungen des Elements sich voneinander unterscheiden.

## Claims

1. Member (8) for building a green tyre blank, **characterized in that** it comprises:
- means of attachment of a base (4),
- external elements (12) mounted with the ability to move relative to one another, and
- a flexible strip (20) via which the elements are joined together.

2. Support (2) for building a green tyre blank, **characterized in that** it comprises a base (4) exhibiting symmetry of revolution and members (8) according to the preceding claim, attached to the base.

3. Support according to the preceding claim, in which each member comprises a pedestal (10) and the elements (12) are attached to the pedestal by the strip.

4. Support according to the preceding claim, in which the strip (20) is rigidly fixed to the pedestal only via a portion of its length.

5. Support according to the preceding claim, in which the portion is situated equal distances from two longitudinal ends of the strip (20).

6. Support according to any one of Claims 2 to 5, in which the strip (20) is inextensible.

7. Support according to at least any one of Claims 2 to 6 in which the strip (20) extends some distance from an internal face of each element (12).

8. Support according to at least any one of Claims 2 to 7 in which, in each element, the strip (20) is interposed, in a direction radial to a main axis (6) of the support, between two pieces (26, 28) of the element.

9. Support according to the preceding claim, in which at least one of the pieces (26, 28) has, facing the strip (20), a face (80, 82) that is configured to allow the element some travel with respect to the strip about an axis locally parallel to the strip and perpendicular to the longitudinal direction of the strip.

10. Support according to at least any one of Claims 2 to 9, in which each member comprises, for each element, at least one return member (24) returning the element towards a pedestal of the member.

11. Support according to the preceding claim, in which the return member (24) is mounted with the ability to move in rotation with respect to at least one of the element and the pedestal about an axis (68, 70) perpendicular to a main axis (6) of the support.

12. Support according to at least any one of Claims 10 and 11, in which the return member (24) is mounted with the ability to move in rotation with respect to the element and to the pedestal about axes (68, 70) that are perpendicular to a main axis (6) of the support.

13. Support according to at least any one of Claims 10 to 12, in which each return member comprises an inelastic telescopic skeleton (62).

14. Support according to at least any one of Claims 10 to 13, in which the support (2) comprises means able to set the base in rotation at a speed lower than a predetermined maximum speed, the return member or members (24) associated with each element being arranged in such a way as to return the element when the support is rotating at the maximum speed.

15. Support according to at least any one of Claims 2 to 14, in which each member comprises at least one cam (22, 23) able to occupy any position out of at least two positions which are the image of one another through a rotation, in which positions the cam defines positions of the elements with respect to a pedestal of the member and which are such that, for at least some of the elements, the positions of the element which are associated with the respective positions of the cam differ from one another.
